# EUROPEAN PATENT APPLICATION

(11) **EP 3 975 621 A1**
(43) Date of publication of application: **30.03.2022**
(21) Application number: 20866586.9
(22) Date of filing: 11.05.2020
(51) Int. Cl.: H04W 48/08, H04B 17/00

(54) **METHOD FOR ADJUSTING WIRELESS ACCESS TERMINAL, DEVICE, ACCESS TERMINAL, AND DETECTION APPARATUS**

(30) Priority: 19.09.2019 CN 201910886322
(71) Applicant: ZTE Corporation, Shenzhen, Guangdong 518057 (CN)
(72) Inventor: WU, Xuebin, Shenzhen, Guangdong 518057 (CN)
(74) Representative: Canzler & Bergmeier Patentanwälte Partnerschaft mbB
(86) International application number: PCT/CN2020/089577
(87) International publication number: WO 2021/051829

(57) **Abstract**

Disclosed in embodiments of the present invention are a method for adjusting a wireless access terminal, a device, an access terminal, and a detection apparatus. The method for adjusting a wireless access terminal comprises: receiving wireless signals while moving a wireless access terminal; determining the highest signal strength according to signal strength values of the wireless signals; and providing indication in the determination process for adjustment of the wireless access terminal.

## Description

The present disclosure claims priority from Chinese patent application No. 201910886322. 3 entitled "METHOD AND APPARATUS FOR ADJUSTING WIRELESS ACCESS TERMINAL, ACCESS TERMINAL AND DETECTION DEVICE", filed on September 19, 2019, the entire contents of which are incorporated herein by reference.

### TECHNICAL FIELD

The present disclosure relates to the field of communication technology, and in particular, to a method and an apparatus for adjusting a wireless access terminal, an access terminal, and a detection device.

### BACKGROUND

The wireless access terminal is a terminal for receiving wireless signals from an external device, a typical example of which is Customer Premise Equipment (CPE). Such wireless access terminal is a mobile signal access device that receives mobile signals and forwards the signals as wireless WIFI signals, and is also a device that converts high-speed 4G or 5G signals into WIFI signals, and can support a large number of mobile terminals to get online simultaneously. Wireless access terminals may be classified into indoor wireless access terminals and outdoor wireless access terminals.

The outdoor wireless access terminal is generally installed at a higher place such as a telegraph pole or an external wall of a tall building or the like. During installation, due to signal receiving desirability for the wireless access terminal, it is desirable to adjust the wireless access terminal, such as CPE, in a certain direction and angle to find an installation location capable of receiving signals, transmitted from an external device such as a 4G or 5G base station, at a highest intensity. A traditional adjusting mode is to use a network cable with one end connected to the wireless access terminal and another end connected to a PC or laptop. Two persons are desirable to cooperate during adjusting, with one checking an intensity of signal transmitted from the wireless access terminal to the PC, and the other regulating the direction and the angle of the wireless access terminal, so that the wireless access terminal is adjusted to a desired installation location for installation through a cooperation of the two persons.

Since two persons in cooperation are desirable for such mode of adjusting and installing the wireless access terminal, a lot of human labor is consumed, and an adjusting structure connected with the network cable further makes inconvenient for field operation.

### SUMMARY

Embodiments of the present disclosure provide a method and an apparatus for adjusting a wireless access terminal, an access terminal, and a detection device to reduce manpower for outdoor adjusting and installation of the wireless access terminal, and have advantages of being convenient for field adjusting and installation operations.

An embodiment of the present disclosure provides a method for adjusting a wireless access terminal, including: receiving wireless signals during moving the wireless access terminal; determining a highest signal intensity according to signal intensity values of the wireless signals; and providing a prompt during the determining, for adjusting the wireless access terminal.

An embodiment of the present disclosure further provides a method for adjusting a wireless access terminal, including: receiving signal intensity values of wireless signals forwarded from the wireless access terminal; determining a highest signal intensity according to the signal intensity values of the wireless signals forwarded from the wireless access terminal; and providing a prompt during determining the highest signal intensity, for adjusting the wireless access terminal.

An embodiment of the present disclosure further provides an apparatus for adjusting a wireless access terminal, including: a first receiving module configured to receive wireless signals during moving the wireless access terminal; a first determination module configured to determine a highest signal intensity according to signal intensity values of the wireless signals; and a first prompt module configured to provide a prompt during a determination process of the first determination module, for adjusting the wireless access terminal.

An embodiment of the present disclosure further provides an apparatus for adjusting a wireless access terminal, including: a second receiving module configured to receive signal intensity values of wireless signals forwarded from the wireless access terminal; a second determination module configured to determine a highest signal intensity according to the signal intensity values of the wireless signals forwarded from the wireless access terminal; and a second prompt module configured to provide a prompt during determining the highest signal intensity by the second determination module, for adjusting the wireless access terminal.

An embodiment of the present disclosure further provides a wireless access terminal, including a memory, a processor and a computer program stored in the memory and executable on the processor, the computer program, when executed by the processor, causing the method for adjusting the wireless access terminal as described above to be implemented.

An embodiment of the present disclosure further provides a detection device, including a memory, a processor and a computer program stored in the memory and executable on the processor, the processor, when executing the computer program, implementing the method for adjusting the wireless access terminal as described above.

An embodiment of the present disclosure further provides a computer readable storage medium having computer executable instructions stored thereon, the computer executable instructions, when being executed by a processor, being configured to cause the method for adjusting the wireless access terminal as described above to be executed.

Features and advantages of the present disclosure will be set forth in the description which follows, and will become apparent from the description at least partially, or be understood by implementing the present disclosure. Objects and other advantages of the present disclosure may be realized and obtained by means of structures particularly pointed out in the description, appended claims and drawings.

### BRIEF DESCRIPTION OF THE DRAWINGS

FIG. 1 is a flowchart of a method for adjusting a wireless access terminal according to an embodiment of the present disclosure;
FIG. 2 is a flowchart of determining a highest signal intensity according to signal intensity values of wireless signals according to an embodiment of the present disclosure;
FIG. 3 is a flowchart of providing a prompt during a determination process for adjusting a wireless access terminal according to an embodiment of the present disclosure;
FIG. 4 is a diagram illustrating a relationship between prompt tones according to an embodiment of the present disclosure;
FIG. 5 is a diagram illustrating a relationship between brightness prompts according to an embodiment of the present disclosure;
FIG. 6 is a flowchart of a method for adjusting a wireless access terminal according to an embodiment of the present disclosure;
FIG. 7 is a flowchart of determining a highest signal intensity according to signal intensity values of wireless signals forwarded from a wireless access terminal according to an embodiment of the present disclosure;
FIG. 8 is a flowchart of providing a prompt during determining a highest signal intensity for adjusting a wireless access terminal according to an embodiment of the present disclosure;
FIG. 9 is a diagram illustrating a relationship between prompt tones according to an embodiment of the present disclosure;
FIG. 10 is a diagram illustrating a relationship between prompt messages according to an embodiment of the present disclosure;
FIG. 11 is a structural diagram of an apparatus for adjusting a wireless access terminal according to an embodiment of the present disclosure;
FIG. 12 is a structural diagram of an apparatus for adjusting a wireless access terminal according to an embodiment of the present disclosure;
FIG. 13 is a structural diagram of a wireless access terminal according to an embodiment of the present disclosure;
FIG. 14 is a structural diagram of a detection device according to an embodiment of the present disclosure; and
FIG. 15 is a structural diagram of an application example according to an embodiment of the present disclosure.

### DETAILED DESCRIPTION

Embodiments of the present disclosure will be described in detail below with reference to the accompanying drawings.

The operations illustrated in the flowchart of the drawings may be executed in a computer system such as a set of computer executable instructions. Also, although a logical order is shown in the flowchart, in some cases, the operations shown or described may be performed in a different order than that illustrated herein.

An outdoor wireless access terminal, such as an outdoor CPE, is a new product form that has been emerged in recent years with the development of high-speed 4G wireless data, and mainly aims to enhance WIFI coverage and expand desirability for outdoor high-speed wireless internet access.

In an existing installation of the outdoor wireless access terminal, a mode of a network cable plus a PC/laptop (with the network cable connected to the PC and the wireless access terminal respectively) is generally adopted to set the outdoor wireless access terminal and adjust an installation direction and an angle thereof. Such mode uses the network cable and the PC during installation, as well as real time checking on a signal intensity of the wireless access terminal via the PC during an adjustment process, and thus two persons are desirable to work in cooperation to complete the adjustment, which results in that many devices are to be carried, a long period of time is to be taken for installation and adjustment, and there is no prompt about an adjusting direction at all during the adjustment process. Moreover, the outdoor wireless access terminal has extremely high desirability on water resistance and dust resistance, and network ports thereof are generally designed within a structural member or tightly sealed by a sealing plug. During installation and adjustment, it is desirable to disassemble the structural member or removing the sealing plug to connect the network cable. After the adjustment is completed, the structural member is further to be assembled or the sealing plug is further to be plugged back. Such process of disassembling/removing and assembling/plugging back is to be implemented at a high place by erecting a ladder against the telegraph pole or the external wall of the tall building, which is extremely unsafe, and may involve falling of structural members or screws and the like. Meanwhile, such mode of installation and adjustment has a relatively low efficiency.

In view of the foregoing situations, an embodiment of the present disclosure provides a method for adjusting a wireless access terminal, which can, by providing a prompt during a determination process for adjusting the wireless access terminal, reduce manpower for outdoor adjusting and installing the wireless access terminal, without a wired connection structure for connecting a network cable, thereby facilitating field adjusting and installation operations.

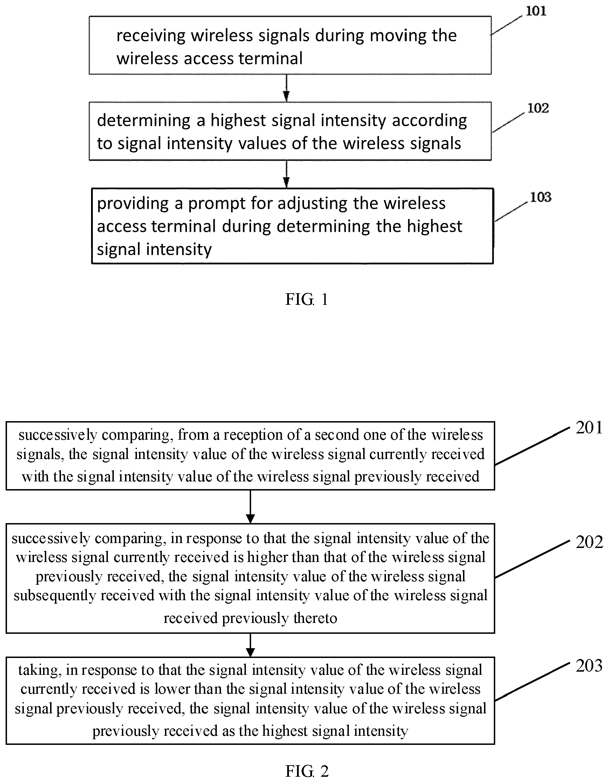

As shown in FIG. 1, the method for adjusting the wireless access terminal according to the embodiment of the present disclosure includes following operations 101 to 103. At operation 101, receiving wireless signals during moving the wireless access terminal. The receiving the wireless signals happens during outdoor installation of the wireless access terminal, and means that the wireless access terminal receives wireless signals transmitted from an external device. The wireless access terminal may be a wireless router, a wireless switch, a wireless CPE or the like. The external device may be a wireless transmitter, a 4G or 5G base station, or any other external device that transmits wireless signals to access the wireless access terminal. The outdoor installation of the wireless access terminal often occurs on a preset height of an outdoor telegraph pole, a holding pole, an external wall of a tall building or an iron tower. The moving includes a horizontal revolution or rotation at the preset height. At operation 102, determining a highest signal intensity according to signal intensity values of the wireless signals. In this operation, the wireless access terminal may obtain the signal intensity values of the wireless signals by: converting, by a radio frequency module of the wireless access terminal after an antenna of the wireless access terminal receives a wireless signal, the wireless signal from an analog signal into a digital signal, namely, performing ADC (analog to digital conversion) by the radio frequency module, and then parsing, by a modem of the wireless access terminal, the signal intensity value of the signal. The highest signal intensity is determined according to the signal intensity values of the wireless signals so that a posture and a position of the wireless access terminal when the highest signal intensity is determined define an installation location of the wireless access terminal, which ensures that the wireless signals sent from the external device are received in high quality. At operation 103, providing a prompt for adjusting the wireless access terminal during determining the highest signal intensity. The wireless access terminal itself performs the determining and provides the prompt for adjusting the wireless access terminal. In this manner, only one person is desirable for adjustment of the wireless access terminal. Thus, fewer devices are to be carried and the period of time for installation and adjustment is shortened. Further, since no network cable is connected for installation and adjustment, the structural member would not be disassembled or the sealing plug would not be removed during installation and adjustment, and thereafter, the structural member would not be assembled again or the sealing plug would not be plugged back again. Thus, an improved safety is caused, and no structural member or screw and the like would fall off. Meanwhile, such installation and adjustment has a higher efficiency.

As shown in FIG. 2, in some implementations, the operation of determining the highest signal intensity according to the signal intensity values of the wireless signals includes following operations 201 to 203. At operation 201, successively comparing the signal intensity value of the wireless signal currently received with the signal intensity value of the wireless signal previously received, from a reception of a second one of the wireless signals,. At operation 202, in response to that the signal intensity value of the wireless signal currently received is higher than the signal intensity value of the wireless signal previously received, successively comparing the signal intensity value of the wireless signal subsequently received with the signal intensity value of the wireless signal received previously thereto. At operation 203, in response to that the signal intensity value of the wireless signal currently received is lower than the signal intensity value of the wireless signal previously received, taking the signal intensity value of the wireless signal previously received, as the highest signal intensity.

In this operation, with movement of the wireless access terminal, the signal intensity value of the wireless signal currently received is successively compared with the signal intensity value of the wireless signal previously received, and the highest signal intensity is thus obtained, which is simple and efficient.

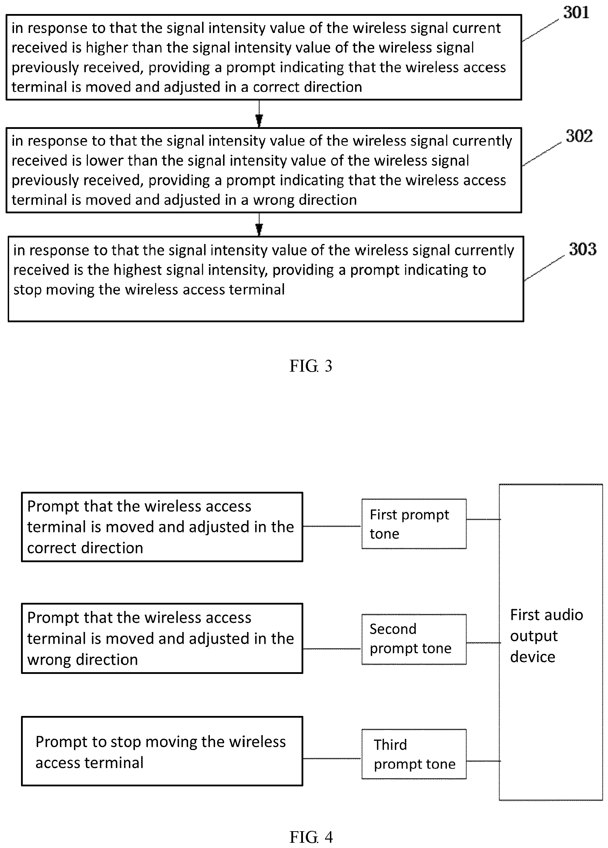

As shown in FIG. 3, in some implementations, the operation of providing the prompt during the determining for adjusting the wireless access terminal includes following operations 301 to 303. At operation 301, in response to that the signal intensity value of the wireless signal currently received is higher than the signal intensity value of the wireless signal previously received, providing a prompt to indicate that the wireless access terminal is moved and adjusted in a correct direction. At operation 302, in response to that the signal intensity value of the wireless signal currently received is lower than the signal intensity value of the wireless signal previously received, providing a prompt to indicate that the wireless access terminal is moved and adjusted in a wrong direction. At operation 303, in response to that the signal intensity value of the wireless signal currently received is the highest signal intensity, providing a prompt to indicate to stop moving the wireless access terminal.

In this operation, during movement of the wireless access terminal, by providing the prompt to indicate that the wireless access terminal is moved and adjusted in the correct direction, to indicate that the wireless access terminal is moved and adjusted in the wrong direction, or to indicate to stop moving the wireless access terminal, only one operator is desirable to adjust the movement of the wireless access terminal with the aid of prompt messages. For example, when the prompt indicates that the wireless access terminal is moved and adjusted in the correct direction, the operator can maintain the moving direction to adjust the posture and position of the wireless access terminal; when the prompt indicates that the wireless access terminal is moved and adjusted in the wrong direction, the operator can adjust the posture and position of the wireless access terminal by reversely moving the wireless access terminal; and when the prompt indicates to stop moving the wireless access terminal, the operator can stop moving the wireless access terminal. With such prompts, one operator can complete the adjusting process of the wireless access terminal at an outdoor preset height by himself/herself, which saves manpower, and since no wired connection structure like network cable is to be used, no additional operator would participate in observing and adjusting, an improved safety is caused, and the efficiency in adjusting of the wireless access terminal is improved.

As shown in FIG. 4, in some implementations, the prompt indicating that the wireless access terminal is moved and adjusted in the correct direction, the prompt indicating that the wireless access terminal is moved and adjusted in the wrong direction, and the prompt indicating to stop moving the wireless access terminal are respectively implemented by providing a first prompt tone, a second prompt tone, and a third prompt tone, which are distinguished from each other, via a first audio output device.

In such implementations, according to the first prompt tone, the second prompt tone, and the third prompt tone provided by the first audio output device, only one operator is desirable, when the wireless access terminal is adjusted and installed at an outdoor preset height position, to maintain the moving direction to adjust the posture and position of the wireless access terminal, to adjust the posture and position of the wireless access terminal by reversely moving the wireless access terminal, or to stop moving the wireless access terminal based on the first prompt tone, the second prompt tone and the third prompt tone, respectively. Thereby, the task of adjusting the wireless access terminal is completed. The first audio output device may be a loudspeaker, a buzzer, a power amplifier, or a sound box. The first prompt tone may be an audio with an intensity or frequency changing from low to high; the second prompt tone may be an audio with an intensity or frequency changing from high to low; and the third prompt tone may be an audio changing according to a specific frequency, such as an audio with a frequency change of two short and one long. Other audios distinguishing from each other, such as a high-volume beep sound, a medium-volume beep sound, and a low-volume beep sound, may also be used as the first prompt tone, the second prompt tone and the third prompt tone, respectively. With the audio prompts, one operator can complete the adjusting process of the wireless access terminal at the outdoor preset height by himself/herself according to the heard prompt tone, thereby saving manpower.

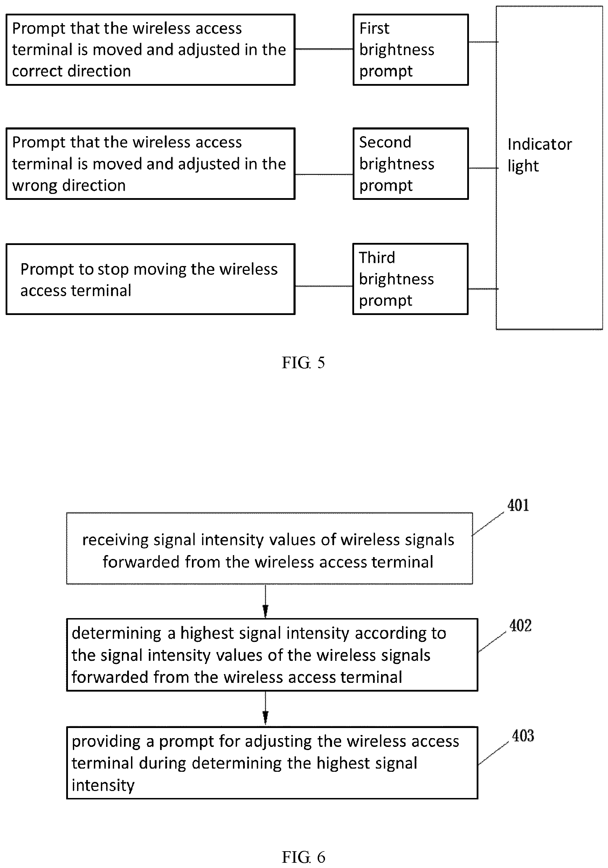

As shown in FIG. 5, in some implementations, the prompt indicating that the wireless access terminal is moved and adjusted in the correct direction, the prompt indicating that the wireless access terminal is moved and adjusted in the wrong direction, and the prompt indicating to stop moving the wireless access terminal are respectively implemented by providing a first brightness prompt, a second brightness prompt, and a third brightness prompt, which are distinguished from each other, via an indicator light.

In such implementations, according to the first brightness prompt, the second brightness prompt, and the third brightness prompt, provided by the indicator light, only one operator is desirable, when the wireless access terminal is adjusted and installed at an outdoor preset height position, to maintain the moving direction to adjust the posture and position of the wireless access terminal, to adjust the posture and position of the wireless access terminal by reversely moving the wireless access terminal, or to stop moving the wireless access terminal based on the first brightness prompt, the second brightness prompt and the third brightness prompt, respectively. Thereby, the task of adjusting the wireless access terminal is completed. The indicator light may be a signal light or an LED light. There may be provided several indicator lights distinguishing from each other in color, such as a red indicator light, a yellow indicator light and a green indicator light. The first brightness prompt may be turning on the red indicator light; the second brightness prompt may be turning on the yellow indicator light; and the third brightness prompt may be turning on the green indicator light. Other brightness prompts distinguishing from each other, such as turning on one indicator light, turning on two indicator lights and turning on three indicator lights, may also be used as the first brightness prompt, the second brightness prompt and the third brightness prompt, respectively. With such brightness prompts, one operator can complete the adjusting process of the wireless access terminal at the outdoor preset height by himself/herself according to the viewed brightness prompt, thereby saving manpower.

In some implementations, the wireless access terminal forwards the signal intensity values of the received wireless signals to the detection device in real time.

In such implementations, after receiving the wireless signals, the detection device may perform processing to further prompt the operator to perform an adjusting operation.

As shown in FIG. 6, another method for adjusting a wireless access terminal according to an embodiment of the present disclosure includes following operations 401 to 403. At operation 401, receiving signal intensity values of wireless signals forwarded from the wireless access terminal. At operation 402, determining a highest signal intensity according to the signal intensity values of the wireless signals forwarded from the wireless access terminal. At operation 403, providing a prompt for adjusting the wireless access terminal during determining the highest signal intensity.

With such operations, determination of the highest signal intensity and provision of the prompt for adjusting of the wireless access terminal during the determination are not dependent on the wireless access terminal solely, which reduces consumption of processing resources, in the wireless access terminal, for determining the highest signal intensity and providing the prompt for adjusting of the wireless access terminal during determining the highest signal intensity; and when the wireless access terminal fails to make the determination or has a fault, the method for adjusting the wireless access terminal can also be used to continue adjusting the wireless access terminal, thereby improving the application reliability.

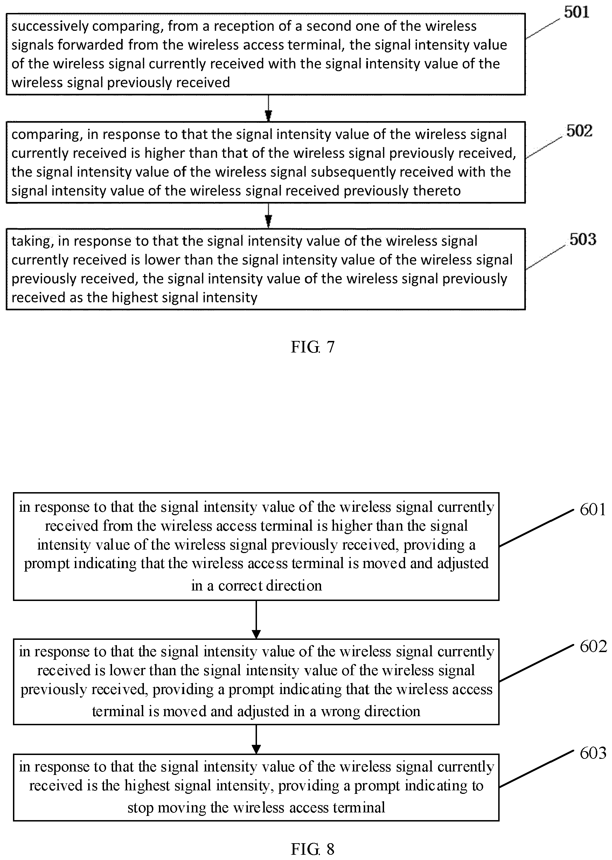

As shown in FIG. 7, in some implementations, the operation of determining the highest signal intensity according to the signal intensity values of the wireless signals forwarded from the wireless access terminal includes following operations 501 to 503. At operation 501, successively comparing the signal intensity value of the wireless signal currently received with the signal intensity value of the wireless signal previously received, from a reception of a second one of the wireless signals forwarded from the wireless access terminal. At operation 502, in response to that the signal intensity value of the wireless signal currently received is higher than the signal intensity value of the wireless signal previously received, successively comparing the signal intensity value of the wireless signal subsequently received with the signal intensity value of the wireless signal received previously thereto. At operation 503, in response to that the signal intensity value of the wireless signal currently received is lower than the signal intensity value of the wireless signal previously received, taking the signal intensity value of the wireless signal previously received, as the highest signal intensity.

In this operation, the signal intensity value of the wireless signal currently received is successively compared with the signal intensity value of the wireless signal previously received, as the wireless access terminal continuously forwards the signal intensity values of the wireless signals, and the highest signal intensity is thus obtained, which is simple and efficient.

As shown in FIG. 8, in some implementations, the operation of providing the prompt for adjusting the wireless access terminal during determining the highest signal intensity includes following operations 601 to 603. At operation 601, in response to that the signal intensity value of the wireless signal currently received and forwarded from the wireless access terminal is higher than the signal intensity value of the wireless signal previously received, providing a prompt to indicate that the wireless access terminal is moved and adjusted in a correct direction. At operation 602, in response to that the signal intensity value of the wireless signal currently received is lower than the signal intensity value of the wireless signal previously received, providing a prompt to indicate that the wireless access terminal is moved and adjusted in a wrong direction. At operation 603, in response to that the signal intensity value of the wireless signal current received is the highest signal intensity, providing a prompt to indicate to stop moving the wireless access terminal.

With such operations, during the process of receiving the signal intensity values of the wireless signals forwarded from the wireless access terminal and the process of determining the highest signal intensity, by providing the prompt to indicate that the wireless access terminal is moved and adjusted in the correct direction, providing the prompt to indicate that the wireless access terminal is moved and adjusted in the wrong direction, and providing the prompt to indicate to stop moving the wireless access terminal, only one operator is desirable to adjust the movement of the wireless access terminal with the aid of prompt messages. For example, when the prompt indicates that the wireless access terminal is moved and adjusted in the correct direction, the operator can maintain the moving direction to adjust the posture and position of the wireless access terminal; when the prompt indicates that the wireless access terminal is moved and adjusted in the wrong direction, the operator can adjust the posture and position of the wireless access terminal by reversely moving the wireless access terminal; and when the prompt indicates to stop moving the wireless access terminal, the operator can stop moving the wireless access terminal. With such prompts, one operator can complete the adjusting process of the wireless access terminal at the outdoor preset height by himself/herself, which saves manpower, and since no wired connection structure like network cable is to be used, no additional operator would participate in observing and adjusting, an improved safety is caused, and the efficiency in adjusting of the wireless access terminal is improved.

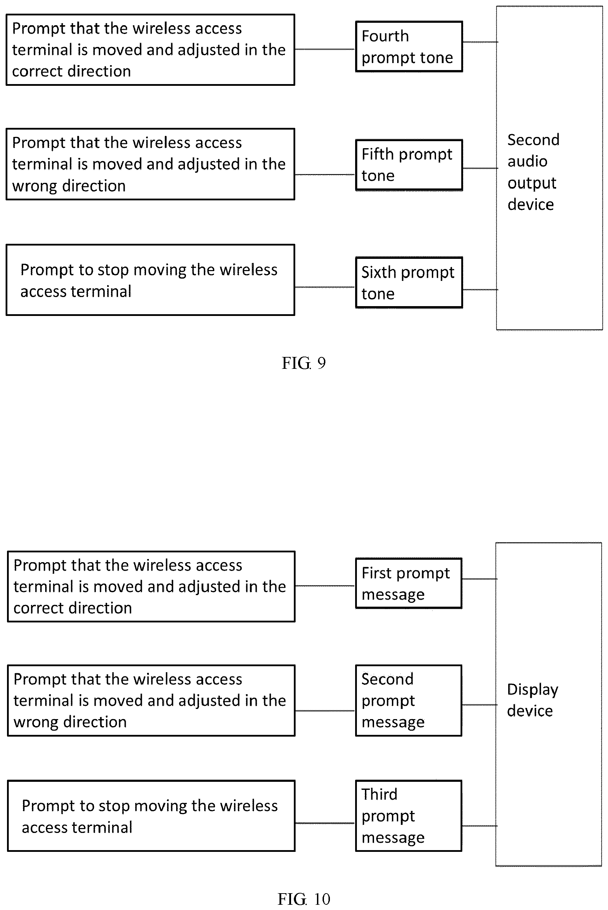

As shown in FIG. 9, in some implementations, the prompt indicating that the wireless access terminal is moved and adjusted in the correct direction, the prompt indicating that the wireless access terminal is moved and adjusted in the wrong direction, and the prompt indicating to stop moving the wireless access terminal are respectively implemented by providing a fourth prompt tone, a fifth prompt tone, and a sixth prompt tone, which are distinguished from each other, via a second audio output device.

In such implementations, according to the fourth prompt tone, the fifth prompt tone, and the sixth prompt tone provided by the second audio output device, only one operator is desirable, when the wireless access terminal is adjusted and installed at an outdoor preset height position, to maintain the moving direction to adjust the posture and position of the wireless access terminal, to adjust the posture and position of the wireless access terminal by reversely moving the wireless access terminal, or to stop moving the wireless access terminal based on the fourth prompt tone, the fifth prompt tone and the sixth prompt tone, respectively. Thereby, the task of adjusting the wireless access terminal is completed. The second audio output device may be a loudspeaker of the detection device. The fourth prompt tone may be an audio with an intensity or frequency changing from low to high; the fifth prompt tone may be an audio with an intensity or frequency changing from high to low; and the sixth prompt tone may be an audio changing according to a specific frequency, such as an audio with a frequency change of two short and one long. Other audios distinguishing from each other, such as a high-volume beep sound, a medium-volume beep sound, and a low-volume beep sound, may be used as the fourth prompt tone, the fifth prompt tone and the sixth prompt tone, respectively. Audios, such as sounds "correct direction, keep moving the wireless access terminal in the current direction for adjusting", "wrong direction, moving the wireless access terminal reversely for adjusting" and "highest signal intensity installation location reached, stop moving the wireless access terminal", may also be used as the fourth prompt tone, the fifth prompt tone and the sixth prompt tone, respectively. With the audio prompts, one operator can complete the adjusting process of the wireless access terminal at the outdoor preset height by himself/herself according to the heard prompt tone, thereby saving manpower.

As shown in FIG. 10, some implementations, providing the prompt indicating that the wireless access terminal is moved and adjusted in the correct direction, providing the prompt indicating that the wireless access terminal is moved and adjusted in the wrong direction, and providing the prompt indicating to stop moving the wireless access terminal are respectively implemented by displaying a first prompt message, a second prompt message and a third prompt message via a display device.

In such implementations, according to the first prompt message, the second prompt message and the third prompt message displayed by the display device, only one operator is desirable, when the wireless access terminal is adjusted and installed at an outdoor preset height position, to maintain the moving direction to adjust the posture and position of the wireless access terminal, to adjust the posture and position of the wireless access terminal by reversely moving the wireless access terminal, or to stop moving the wireless access terminal based on the first prompt message, the second prompt message and the third prompt message, respectively. Thereby, the task of adjusting the wireless access terminal is completed. The display device may be a liquid crystal display or a display screen of a detection device. The first prompt message may be a color block with a color changing from light to dark; the second prompt message may be a color block with a color changing from dark to light; and the third prompt message may be a color block with a flickering color. Other manners distinguishing from each other, such as progress bar changes including moving leftward, moving rightward and moving rightward to the end, may be used as the first prompt message, the second prompt message and the third prompt message, respectively. With the first prompt message, the second prompt message and the third prompt message displayed by the display device, one operator can complete the adjusting process of the wireless access terminal at the outdoor preset height by himself/herself according to the viewed prompt message, thereby saving manpower.

In some implementations, the display device further displays the signal intensity values of the wireless signals forwarded from the wireless access terminal in real time.

In such implementations, by such real time displaying the signal intensity values of the wireless signals forwarded from the wireless access terminal, an operator can more visually and clearly see the signal intensity values of the wireless signals received by the wireless access terminal, thereby facilitating the adjusting.

In summary, in the embodiment of the present disclosure, by providing prompts for adjusting the wireless access terminal during the determination process, the manpower desirable for outdoor adjusting and installation of the wireless access terminal is reduced, and no wired connection structure like network cable is desirable, thereby facilitating field adjusting and installation operations. Further, since no network cable is desirable, the structural member would not be disassembled or the sealing plug would not be removed during the installation and adjustment, and thereafter, the structural member would not be assembled again or the sealing plug would not be plugged back again. Thus, an improved safety is caused, and no structural member or screw and the like would fall off. Meanwhile, such installation and adjustment has a higher efficiency.

The following is explanation by way of an application example. In the application example, an outdoor CPE is used as the wireless access terminal.

With the development and popularization of 4G and 5G, wireless data rates are getting higher and higher. With the development of smartphones and the like, the wireless data is depended on more and more. Traditional wired CPEs are gradually replaced by wireless CPEs. Further, with the advance of 5G technology, outdoor CPEs are also depended on more and more.

The outdoor CPE is a relatively good supplement to a 5G wireless terminal, and enables more people to access a 5G network through WIFI and the like and enjoy the high speed of 5G in public places such as large-scale office places, gymnasiums and exhibition halls. The outdoor CPE is a development direction of 5G equipment, and an improvement in installation of the outdoor CPE is also a direction for improving competitiveness of future related products, because the CPE is not only a product itself, but also the installation and adjusting thereof are very important factors, which reflect a design capability of after-sale services.

This application example is mainly applied to the installation and adjusting of outdoor 5G and 4G standard CPE products, for example, installation of outdoor CPEs for high buildings such as telegraph poles, poles, building facades, iron towers, or the like, and public places, can improve the installation efficiency while reducing the installation difficulty, and reduce manpower as well as cost. Simultaneously, the safety during installation can be improved.

In this application example, a Bluetooth chip serving as a first wireless communication module is desirable to be built in a motherboard of the outdoor CPE, and the Bluetooth chip may exist alone or be integrated with a WIFI chip or the like. The Bluetooth chip is connected to a main chip of an application processor (AP) serving as a processor of the outdoor CPE through a serial or parallel data interface such as I2C/UART/SPI. The application processor (AP) may transmit/receive wireless signal intensities received by the outdoor CPE, internal parameters and the like, to/from the Bluetooth chip via the serial or parallel interface.

A buzzer (or any other audio device) serving as the first audio output device is desirable to be built in the motherboard of the outdoor CPE, and the buzzer may be controlled by one or several General Purpose Inputs/Outputs (GPIOs) of the application processor (AP) to provide sounds with different frequencies or loudness according to different signal intensities received by the outdoor CPE. For example, a sound changing from low to high indicates that the wireless signals get better and better during movement of the outdoor CPE. When the desierd location is reached, the buzzer provides a sound of a particular frequency (e.g., a sound with one long and one short beeps), to indicate that the terminal is in position. If the adjusting direction is wrong, the buzzer provides a prompt with a relatively sharp beep sound.

A plurality of single-color or multi-color LED lights serving as indicator lights are further provided within the outdoor CPE, and the application processor (AP) controls the LED lights to show a current signal intensity state of the outdoor CPE through GPIO pins. For example, there may be provided several LED lights distinguishing from each other in color, such as a red LED light, a yellow LED light and a green LED light. The first brightness prompt may be turning on the red LED light; the second brightness prompt may be turning on the yellow LED light; and the third brightness prompt may be turning on the green LED light. Other brightness prompts distinguishing from each other, such as turning on one LED light, turning on two LED lights and turning on three LED lights, may be used as the first brightness prompt, the second brightness prompt and the third brightness prompt, respectively. With the brightness prompts, one operator can complete the adjusting process of the wireless access terminal at the outdoor preset height by himself/herself according to the viewed brightness prompt, thereby saving manpower.

In order to monitor the wireless signal intensity in real time during adjusting the outdoor CPE, a smartphone may be used. The smartphone may be in data communication with the outdoor CPE via a Bluetooth communication protocol, and the signal intensity values of the wireless signals received by the outdoor CPE may be sent to the smartphone via a Bluetooth data channel. The signal intensity data may be displayed on the smartphone via an application (APP). In addition, in order to conveniently monitor and adjust parameters of the outdoor CPE, some data (such as a maximum rate limit and a user access number limit) to be adjusted by an operator may be displayed by the APP. When the data has been adjusted by the operator through the APP, the smartphone sends the data to the outdoor CPE via the Bluetooth protocol, and after receiving the data, the application processor (AP) of the outdoor CPE writes the data into an internal memory to complete the adjustment. Similarly, during moving and adjusting the outdoor CPE, the APP of the smartphone may provide a prompt about the signal intensity state through a color block/progress bar/mobile phone sound, or the like. For example, according to the fourth prompt tone, the fifth prompt tone, and the sixth prompt tone provided by a loudspeaker of a mobile phone, only one operator is desirable, when the wireless access terminal is adjusted and installed at an outdoor preset height position, to maintain the moving direction to adjust the posture and position of the wireless access terminal, to adjust the posture and position of the wireless access terminal by reversely moving the wireless access terminal, or to stop moving the wireless access terminal based on the fourth prompt tone, the fifth prompt tone and the sixth prompt tone, respectively. Thereby, the task of adjusting the wireless access terminal is completed. The fourth prompt tone may be an audio with an intensity or frequency changing from low to high; the fifth prompt tone may be an audio with an intensity or frequency changing from high to low; and the sixth prompt tone may be an audio changing according to a specific frequency, such as an audio with a frequency change of two short and one long. Other audios distinguishing from each other, such as a high-volume beep sound, a medium-volume beep sound, and a low-volume beep sound, may be used as the fourth prompt tone, the fifth prompt tone and the sixth prompt tone, respectively. Audios, such as sounds "correct direction, keep moving the wireless access terminal in the current direction for adjusting", "wrong direction, moving the wireless access terminal reversely for adjusting" and "highest signal intensity installation location reached, stop moving the wireless access terminal", may also be used as the fourth prompt tone, the fifth prompt tone and the sixth prompt tone, respectively. With the audio prompts, one operator can complete the adjusting process of the outdoor CPE at the outdoor preset height by himself/herself according to the heard prompt tone with one hand holding the mobile phone and the other moving the outdoor CPE, thereby saving manpower. The efficiency of adjustment can thus be better improved. Further, it may also be possible to adjust and install the wireless access terminal at an outdoor preset height position according to a first prompt message, a second prompt message and a third prompt message displayed on the display screen of the smartphone, in such case, only one operator is desirable to maintain the moving direction to adjust the posture and position of the wireless access terminal, to adjust the posture and position of the wireless access terminal by reversely moving the wireless access terminal, or to stop moving the wireless access terminal based on the first prompt message, the second prompt message and the third prompt message, respectively. Thereby, the task of adjusting the wireless access terminal is completed. The first prompt message may be a color block with a color changing from light to dark; the second prompt message may be a color block with a color changing from dark to light; and the third prompt message may be a color block with a flickering color. Other manners distinguishing from each other, such as progress bar changes including moving leftward, moving rightward and moving rightward to the end, may be used as the first prompt message, the second prompt message and the third prompt message, respectively. With the first prompt message, the second prompt message and the third prompt message displayed by the display device, one operator can complete the adjusting process of the wireless access terminal at the outdoor preset height by himself/herself according to the viewed prompt message, thereby saving manpower.

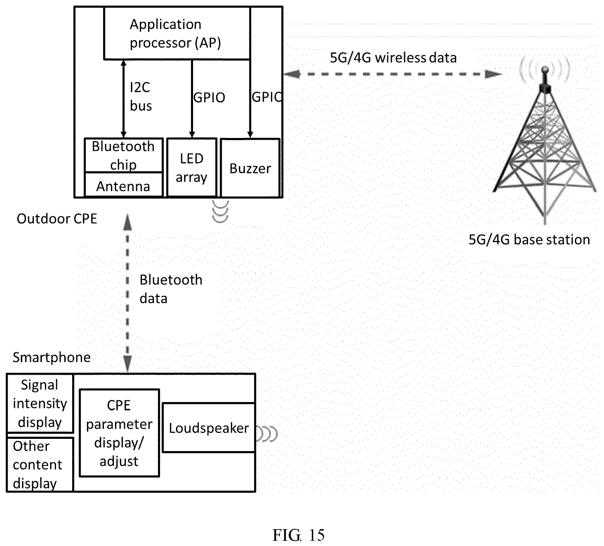

As shown in FIG. 15, the application example is specifically as described below: hardware architecture of the application example includes two parts, one part is an outdoor CPE including a Bluetooth chip, a buzzer and an LED light, and the other part is a smartphone with an APP.

In the outdoor CPE, a Bluetooth chip, a buzzer and the like are further provided in addition to hardware circuits of function part of a traditional outdoor CPE commonly used. In addition, an LED light (a traditional LED light on the outdoor CPE indicates whether 5G/4G is online, whether WIFI is online, whether a wired network port is online, or serves as a power supply light and the like) is added.

In this application example, a main function of the Bluetooth chip is to conduct data communication with the application processor (AP) via a serial or parallel interface such as I2C or SPI/UART, and to send data, such as signal intensity values of the wireless signals received by the outdoor CPE/ parameters of the outdoor CPE obtained by the application processor (AP), to the smartphone through an antenna. Meanwhile, modification data, for the parameters of the CPE, transmitted from the smartphone is received via the antenna.

A combination of several LED lights or light colors of an LED light array including a group of LED lights controlled by GPIO of the application processor (AP) may be controlled by the application process (AP) to indicate whether the CPE is being moved correctly or has been moved in place during the adjustment process.

As a device capable of making sounds, the buzzer (or any other audio device) is also controlled by a GPIO pin of the application processor (AP) (for an audio device, the GPIO is replaced by an audio data bus such as I2S, PCM, SLIMBUS, etc.), and can make different sounds (or sounds with different volumes) according to changes in the signal intensity of the wireless signals received by the outdoor CPE, so as to prompt whether the adjusting direction is correct and whether the adjustment is in place.

An application (APP) is desirable to be installed on the smartphone first, and the main function of the APP is to display signal intensities of wireless signals, such as 5G/4G signals, received by the outdoor CPE and transmitted from the outdoor CPE via the Bluetooth chip, as well as parameters (such as a WIFI speed limit value and the number of users allowed to access) of the outdoor CPE to be set and adjusted. Meanwhile, a user can input and modify the parameters on an interface of the APP. The modified parameters are transmitted back to the application processor (AP) of the outdoor CPE via the Bluetooth chip to complete the modification. Meanwhile, a combination of progress bars or color blocks may be provided on the interface of the APP so that states of the wireless signals during movement of the outdoor CPE are visually displayed, which is similar to the function of the LED or the like on the outdoor CPE. While the APP displays on the interface thereof, a loudspeaker of the smartphone may be used to provide prompts during the movement and adjustment of the outdoor CPE, and functions similarly to that of the buzzer on the outdoor CPE.

With indications and prompts provided through combined functions of the LED light array and the buzzer on the outdoor CPE, the display on the interface of the APP and the loudspeaker of the smartphone, it is convenient for the operator installing the outdoor CPE with an improved installation effectiveness, and to accomplish the installation alone.

The method for adjusting the outdoor CPE includes following operations 1 to 8.
1. In the design of the outdoor CPE, a Bluetooth chip is connected to an application processor (AP) via a serial or parallel interface; a buzzer (or any other sounding device/means) is designed into a hardware circuit, and the buzzer may be controlled by the application processor (AP) via GPIO; and an LED light array (including a plurality of lights) is designed into the hardware circuit. The application processor (AP) may control the Bluetooth chip, the buzzer and the LED light array via a plurality of GPIO pins.
2. An APP is developed and designed through software, and the APP can display a signal intensity value of a forwarded wireless signal, setting information of other parameters, a progress bar, a color block and the like on the smartphone. Meanwhile, a loudspeaker of the smartphone may be controlled to make a sound to provide a prompt about signal states of the wireless signals received by the outdoor CPE to an operator installing the outdoor CPE.
3. The operator installing the outdoor CPE starts to install the outdoor CPE and moves the outdoor CPE for adjustment so that the received wireless signal, received from a 4G or 5G base station, reaches a desired state, which means that the signal intensity value of the received wireless signal is highest.
4. The AP of the outdoor CPE judges whether the moving direction is correct according to the 5G/4G signal intensity data of the outdoor CPE before the adjustment and changes in the signal intensity data during the adjustment.
5. If the moving direction is correct, a prompt may be provided by any one of following manners I and II.
   I: The application processor (AP) on the outdoor CPE uses LED lights (e.g., changing from one LED light to two LED lights or from a yellow LED light to a blue LED light) and buzzer sounds (e.g., a sound changing from low to high or a sound with a frequency changing from low to high) or the like to prompt the operator to continue adjusting in the moving direction.
   II: The application processor (AP) of the outdoor CPE sends real time signal intensity data of the outdoor CPE to a smartphone by using a Bluetooth chip, where the real time signal intensity data of the outdoor CPE may be displayed on an interface of an APP of the smartphone, and meanwhile, varied display manners such as changes in a progress bar (for example, changing from one cell to two cells) and sounds of a mobile phone loudspeaker (for example, a human voice prompt of "signal intensity XXXX, please continue the adjustment" and the like) may be used to prompt the operator to continue adjusting in the direction and at the angle.
6. If the moving direction is wrong, a prompt may be provided by any one of following manners I and II.
   I: The application processor (AP) on the outdoor CPE uses LED lights (e.g., turning on a red LED light) and buzzer sounds (e.g., a special beep sound) or the like to prompt the operator that the outdoor CPE is being moved in a wrong direction, and the adjustment should be performed in a reverse direction.
   II: The application processor (AP) of the outdoor CPE sends real time signal intensity data of the outdoor CPE to a smartphone by using a Bluetooth chip, where the real time signal intensity data of the the outdoor CPE may be displayed on an interface of an APP of the smartphone, and meanwhile, a continuously flickering red block (for example, a red bar continuously flickering on the screen) is displayed on the screen of the smartphone, and the loudspeaker of the mobile phone makes a sound (for example, a human voice prompt of "signal worsened, please adjust in the reverse direction" and the like) to prompt the operator to change the adjusting direction and angle.
7. During adjusting in the correct direction, the application processor (AP) of the outdoor CPE continuously determines a magnitude of the signal intensity, until the outdoor CPE is adjusted to a location at which the communication signals between the outdoor CPE and the base station are desired. In such case, a prompt may be provided by any one of following manners I and II.
   I: The application processor (AP) on the outdoor CPE uses LED lights (e.g., turning on a green LED light) and buzzer sounds (e.g., a beep sound of two long and one short) or the like to prompt the operator that the desired location is reached and the adjustment should be stopped.
   II: The application processor (AP) of the outdoor CPE sends the message indicating to stop adjustment and real time signal intensity data of the outdoor CPE to a smartphone using a Bluetooth chip, where the real time signal intensity data of the outdoor CPE may be displayed on an interface of an APP of the smartphone, and meanwhile, varied display manners such as changes in a progress bar or color block (for example, a full progress bar or a flickering green block) and loudspeaker sounds of the mobile phone (for example, a human voice prompt of "the signal intensity being desired, please stop adjustment" and the like) may be used to prompt the operator to stop adjusting the direction and the angle.
8. The outdoor CPE is stopped and kept in the posture and position at that time, and is bolted to the telegraph pole and the external wall.

This application example mainly utilizes wireless data communication technology such as the Bluetooth chip and the like to replace a wired data transmission technology such as a network cable during installation and adjusting of an outdoor CPE, so that the shell structural member or the sealing plug of the outdoor CPE would not be removed to install the network cable. This application example also utilizes the portability of the smartphone to facilitate adjustment by one person. Meanwhile, in order to improve the efficiency and increase other perceptibility, prompts provided by the buzzer/LED light are added to accelerate the adjustment process. Since the outdoor CPE would not be disassembled, the safety of the operator during working is improved, and the possibility falling components from a high place during disassembly is eliminated. Therefore, this application example improves the traditional installation and adjustment mode by replacing the network cable with a wireless communication technology such as the Bluetooth chip, and replacing a PC with an intelligent terminal such as a smartphone. Meanwhile, by the cooperation of the buzzer, the LED and other audio, optical and electrical means, not only efficiency in installation of the outdoor CPE is improved, but also adjustment of the outdoor CPE can be completed by one person, thereby saving manpower resources.

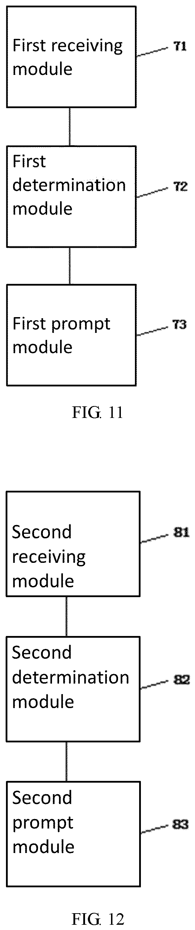

As shown in FIG. 11, an embodiment of the present disclosure further provides an apparatus for adjusting a wireless access terminal, including: a first receiving module 71 configured to receive wireless signals during moving a wireless access terminal; a first determination module 72 configured to determine a highest signal intensity according to signal intensity values of the wireless signals; and a first prompt module 73 configured to provide a prompt for adjusting the wireless access terminal during a determination process of the first determination module 72.

In the embodiment of the present disclosure, by providing the prompt for adjusting the wireless access terminal during the determination process, the manpower for outdoor adjusting and installation of the wireless access terminal is reduced, and no wired connection structure for connecting a network cable structure is to be used, thereby facilitating field adjusting and installation operations.

As shown in FIG. 12, an embodiment of the present disclosure further provides an apparatus for adjusting a wireless access terminal, including: a second receiving module 81 configured to receive signal intensity values of wireless signals forwarded from the wireless access terminal; a second determination module 82 configured to determine a highest signal intensity according to the signal intensity values of the wireless signals forwarded from the wireless access terminal; a second prompt module 83 configured to provide a prompt during determining the the highest signal intensity for adjusting the wireless access terminal.

In this manner, determination of the highest signal intensity and provision of the prompt during the determination for adjusting the wireless access terminal are not dependent on the wireless access terminal solely, which reduces consumption of processing resources in the wireless access terminal for determining the highest signal intensity and providing the prompt during the determination for adjusting of the wireless access terminal; and when the wireless access terminal fails to make the determination or has a fault, the wireless access terminal can also be continued to be adjusted , thereby improving the application reliability.

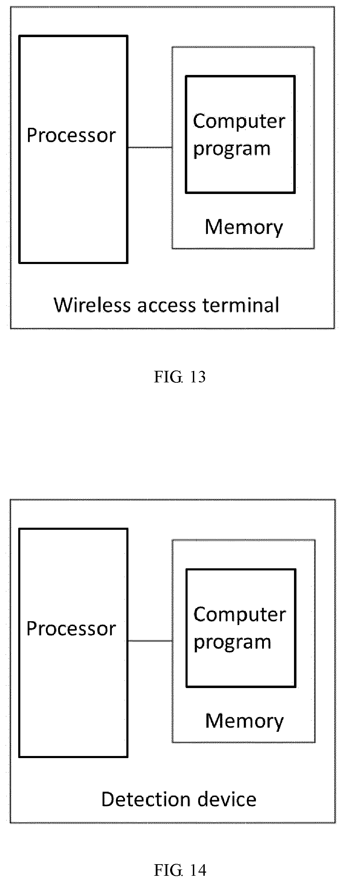

As shown in FIG. 13, an embodiment of the present disclosure further provides a wireless access terminal, including a memory, a processor and a computer program stored in the memory and executable on the processor. The processor, when executing the computer program, implements the method for adjusting the wireless access terminal as described above.

In some implementations, the wireless access terminal further includes a first wireless communication module, a first audio output device, and an indicator light. The first wireless communication module, the first audio output device and the indicator light are electrically connected with the processor of the wireless access terminal.

In such implementations, the processor of the wireless access terminal can control the first audio output device and the indicator light to complete their respective functions; and the processor of the wireless access terminal can further control the first wireless communication module to forward signal intensity values of the received wireless signals. The first wireless communication module includes a Bluetooth chip, a WIFI chip, a ZigBee chip, an infrared communication chip or any other wireless short-distance data transmission chip.

As shown in FIG. 14, an embodiment of the present disclosure further provides a detection device, including a memory, a processor and a computer program stored in the memory and executable on the processor. The processor, when executing the computer program, implements the method for adjusting the wireless access terminal as described above.

In some implementations, the detection device further includes a second wireless communication module, a second audio output device, and a display device. The second wireless communication module, the second audio output device and the display device are each electrically connected to the processor of the detection device, and the second wireless communication module is configured to be in communication connection with the first wireless communication module.

In such implementations, the processor of the detection device can control the second audio output device and the display device to complete their respective functions; and the processor of the detection device can further control the second wireless communication module to receive the signal intensity values of the wireless signals forwarded from the first wireless communication module. The second wireless communication module includes a Bluetooth chip, a WIFI chip, a ZigBee chip, an infrared communication chip or any other wireless short-distance data transmission chip. The detection device is generally implemented by a smartphone or any other mobile smart handheld terminal.

An embodiment of the present disclosure further provides a computer readable storage medium having computer executable instructions stored thereon, the computer executable instructions, when executed by a processor, being configured to cause the method for adjusting the wireless access terminal as described above to be executed.

The method for adjusting the wireless access terminal according to the embodiment of the present disclosure includes: receiving wireless signals; determining a highest signal intensity according to signal intensity values of the wireless signals; and providing a prompt during for adjusting the wireless access terminal during determining the highest signal intensity. In the embodiment of the present disclosure, by providing the prompt for adjusting the wireless access terminal during determining the highest signal intensity, the manpower for outdoor adjusting and installation of the wireless access terminal is reduced, and no wired connection structure for connecting a network cable is desired, thereby facilitating field adjusting and installation operations.

In the embodiment, the storage medium may include, but is not limited to: a U Disk, a read-only memory (ROM), a random access memory (RAM), a mobile hard disk, a disk or optical disk, and any other medium that can store program codes. Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those skilled in the art that communication medium typically includes a computer readable instruction, a data structure, a program module, or other modulated data signals such as a carrier wave or other transport mechanism.

## Claims

1. A method for adjusting a wireless access terminal, comprising:
receiving wireless signals during moving the wireless access terminal;
determining a highest signal intensity according to signal intensity values of the wireless signals; and
providing a prompt for adjusting the wireless access terminal during determining the highest signal intensity.

2. The method according to claim 1, wherein the determining the highest signal intensity according to the signal intensity values of the wireless signals comprises: successively comparing, from a reception of a second one of the wireless signals, the signal intensity value of the wireless signal currently received with the signal intensity value of the wireless signal previously received;
successively comparing, in response to that the signal intensity value of the wireless signal currently received is higher than the signal intensity value of the wireless signal previously received, the signal intensity value of the wireless signal subsequently received with the signal intensity value of the wireless signal received previously thereto; and
taking, in response to that the signal intensity value of the wireless signal received currently is lower than the signal intensity value of the wireless signal previously received, the signal intensity value of the wireless signal previously received as the highest signal intensity.

3. The method according to claim 2, wherein the providing the prompt for adjusting the wireless access terminal during determining the highest signal intensity comprises:
in response to that the signal intensity value of the wireless signal currently received is higher than the signal intensity value of the wireless signal previously received, providing a prompt indicating that the wireless access terminal is moved and adjusted in a correct direction;
in response to that the signal intensity value of the wireless signal currently received is lower than the signal intensity value of the wireless signal previously received, providing a prompt indicating that the wireless access terminal is moved and adjusted in a wrong direction; and
in response to that the signal intensity value of the wireless signal currently received is the highest signal intensity, providing a prompt indicating to stop moving the wireless access terminal.

4. The method according to claim 3, wherein the providing the prompt indicating that the wireless access terminal is moved and adjusted in the correct direction, the providing the prompt indicating that the wireless access terminal is moved and adjusted in the wrong direction, and the providing the prompt indicating to stop moving the wireless access terminal are respectively implemented by providing a first prompt tone, a second prompt tone, and a third prompt tone, which are distinguished from each other, via a first audio output device.

5. The method according to claim 3, wherein the providing the prompt indicating that the wireless access terminal is moved and adjusted in the correct direction, the providing the prompt indicating that the wireless access terminal is moved and adjusted in the wrong direction, and the providing the prompt indicating to stop moving the wireless access terminal are respectively implemented by providing a first brightness prompt, a second brightness prompt, and a third brightness prompt, which are distinguished from each other, via an indicator light.

6. The method according to claim 1, wherein the wireless access terminal forwards the signal intensity values of the wireless signals to a detection device in real time.

7. A method for adjusting a wireless access terminal, comprising: receiving signal intensity values of wireless signals forwarded from the wireless access terminal; determining a highest signal intensity according to the signal intensity values of the wireless signals forwarded from the wireless access terminal; and providing a prompt for adjusting the wireless access terminal during determining the highest signal intensity.

8. The method according to claim 7, wherein the determining the highest signal intensity according to the signal intensity values of the wireless signals forwarded from the wireless access terminal comprises:
successively comparing, from a reception of a second one of the wireless signals forwarded from the wireless access terminal, the signal intensity value of the wireless signal currently received with the signal intensity value of the wireless signal previously received;
successively comparing, in response to that the signal intensity value of the wireless signal current received is higher than the signal intensity value of the wireless signal previously received, the signal intensity value of the wireless signal subsequently received with the signal intensity value of the wireless signal received previously thereto; and
taking, in response to that the signal intensity value of the wireless signal currently received is lower than the signal intensity value of the wireless signal previously received, the signal intensity value of the wireless signal previously received as the highest signal intensity.

9. The method according to claim 8, wherein the providing the prompt for adjusting the wireless access terminal during determining the highest signal intensity comprises:
in response to that the signal intensity value of the wireless signal currently received from the wireless access terminal is higher than the signal intensity value of the wireless signal previously received, providing a prompt indicating that the wireless access terminal is moved and adjusted in a correct direction;
in response to that the signal intensity value of the wireless signal currently received is lower than the signal intensity value of the wireless signal previously received, providing a prompt indicating that the wireless access terminal is moved and adjusted in a wrong direction; and
in response to that the signal intensity value of the wireless signal current received is the highest signal intensity, providing a prompt indicating to stop moving the wireless access terminal.

10. The method according to claim 9, wherein providing the prompt indicating that the wireless access terminal is moved and adjusted in the correct direction, providing the prompt indicating that the wireless access terminal is moved and adjusted in the wrong direction, and providing the prompt indicating to stop moving the wireless access terminal are respectively implemented by providing a fourth prompt tone, a fifth prompt tone, and a sixth prompt tone, which are distinguished from each other, via a second audio output device.

11. The method according to claim 9, wherein providing the prompt indicating that the wireless access terminal is moved and adjusted in the correct direction, providing the prompt indicating that the wireless access terminal is moved and adjusted in the wrong direction, and providing the prompt indicating to stop moving the wireless access terminal are respectively implemented by displaying a first prompt message, a second prompt message and a third prompt message via a display device.

12. The method according to claim 11, wherein the display device further displays the signal intensity values of the wireless signals forwarded from the wireless access terminal in real time.

13. An apparatus for adjusting a wireless access terminal, comprising:
a first receiving module configured to receive wireless signals during moving the wireless access terminal;
a first determination module configured to determine a highest signal intensity according to signal intensity values of the wireless signals; and
a first prompt module configured to provide a prompt for adjusting the wireless access terminal during a determination process of the first determination module.

14. An apparatus for adjusting a wireless access terminal, comprising:
a second receiving module configured to receive signal intensity values of wireless signals forwarded from the wireless access terminal;
a second determination module configured to determine a highest signal intensity according to the signal intensity values of the wireless signals forwarded from the wireless access terminal; and
a second prompt module configured to provide a prompt for adjusting the wireless access terminal during a determination process of the second determination module.

15. A wireless access terminal, comprising a memory, a processor and a computer program stored in the memory and executable on the processor, wherein the processor, when executing the computer program, performs the method for adjusting the wireless access terminal according to any one of claims 1 to 6.

16. The wireless access terminal according to claim 15, further comprising: a first wireless communication module, a first audio output device, and an indicator light; and
the first wireless communication module, the first audio output device and the indicator light are each electrically connected to the processor of the wireless access terminal.

17. A detection device, comprising a memory, a processor and a computer program stored in the memory and executable on the processor, wherein the processor, when executing the computer program, performs the method for adjusting the wireless access terminal according to any one of claims 7 to 12.

18. The detection device according to claim 17, further comprising: a second wireless communication module, a second audio output device, and a display device; and
the second wireless communication module, the second audio output device and the display device are each electrically connected to the processor of the detection device, and the second wireless communication module is configured to be in communication connection with the first wireless communication module.

19. A computer readable storage medium having computer executable instructions stored thereon, wherein the computer executable instructions are configured, when executed by a processor, to causes the method for adjusting the wireless access terminal according to any one of claims 1 to 12 to be implemented.
